# EUROPEAN PATENT APPLICATION

(11) **EP 3 187 056 A1**
(43) Date of publication of application: **05.07.2017**
(21) Application number: 15020260.4
(22) Date of filing: 30.12.2015
(51) Int. Cl.: A23L 19/00, A23L 7/10, A23L 7/117, A23L 33/16, A23L 33/19

(54) **POWDERED WHEY AND CEREAL FOOD PRODUCT AND THEIR PRODUCTION METHOD**

(71) Applicant: Czarska-Sawicka Marzena trade as ZOTMIS, 86-050 Solec Kujawski (PL)
(72) Inventor: Czarska-Sawicka, Marzena, 86-050 Solec Kujawski (PL); Sawicki, Jerzy, 85-330 Bydgoszcz (PL)
(74) Representative: Cwiklinski, Grzegorz

(57) **Abstract**

Food product characterised by the content of cereals in the quantity from 50 to 80 parts by weight, powdered whey in the quantity from 15 to 40 parts by weight, powdered form of fruit and/or lyophilised fruit in the quantity from 4 to 20 parts by weight, and soluble magnesium or calcium salt in the quantity from 0,5 to 1 parts by weight.

## Description

The subject of invention is a powdered whey and cereals food product as well as method of their production. The product is targeted at direct consumption after pouring it with hot water, thus delivering a new type of tasty snack with low fat and high valuable protein content.

Whey is the biggest by-product of cheese and casein production in the dairy industry. It is also a burdensome waste from an environmental perspective. For 1 portion of cheese produced, there are 10 portions of whey, which are to some extent used directly as feed and raw product in the lactose production. At the same time, whey can become a valuable nutritional ingredient as a result of its content comprising up to 5% lactose, up to 1% protein and up to 0,5% fat. It also contains mineral salts, vitamins, and cysteine (an extremely valuable amino acid contained by protein). The problem lies in the low content of whey dry mass. For this reason, whey tends to be subjected to the processes of concentration and water evaporation so as to obtain a powdered form. However, the problem of unpleasant taste and smell resulting from bacterial milk processing still remains.

This problem is solved by the invented food product.

Unexpectedly, it was discovered that adding pulverised or lyophilised fruit mixed with magnesium or calcium citrate, or other soluble magnesium or calcium salt, masks the unfavourable taste and odour of whey.

The essence of the invention is that the food product contains cereals in the quantity from 50 to 80 parts by weight, powdered whey in the quantity from 15 to 40 parts by weight, fruit in the form of powder and/or lyophilised fruit in the quantity from 4 to 20 parts by weight, and soluble magnesium or calcium salt in the quantity form 0,5 to 1 parts by weight.

It is favourable if food product contains cereals in the quantity from 50 to 80 parts by weight, powdered whey in the quantity from 15 to 40 parts by weight, lyophilised fruit in the quantity from 4 to 20 parts by weight, and magnesium citrate or calcium lactate in the quantity from 0,5 to 1 parts by weight.

It is favourable if food product contains cereals in the quantity of 59 parts by weight, powdered whey in the quantity of 20 parts by weight, lyophilised fruit in the quantity of 20 parts by weight and magnesium citrate in the quantity of 1 part by weight. The way of manufacturing the food product according to this invention consists of mixing powdered whey, powdered fruit and magnesium or calcium salt in a horizontal mixer, particularly in a ribbon mixer, in set proportions, properly weighing and adding portions of this mixture to a separate package containing the portion of cereals.

A variety form of the food product according to the invention, is produced by mixing powdered whey and magnesium or calcium salt in a horizontal mixer, particularly ribbon-type, in set proportions and adding them to a separate package of properly weighted portion of cereals previously mixed with lyophilised fruit in set proportions.

### Example 1:

Oat flakes in the quantity of 59 parts by weight,
powdered whey in the quantity of 20 parts by weight,
lyophilised fruit in the quantity of 20 parts by weight, magnesium citrate in the quantity of 1 part by weight.

### Example 2:

Processed oat flakes 61 parts by weight,
Plain and/or demineralised powdered whey 30 parts by weight,
Apple powder or lyophilised fruit 08 parts by weight,
Magnesium citrate 01 parts by weight.

## Claims

1. Food product **characterised by** the content of cereals in the quantity from 50 to 80 parts by weight, powdered whey in the quantity from 15 to 40 parts by weight, powdered form of fruit and/or lyophilised fruit in the quantity from 4 to 20 parts by weight, and soluble magnesium or calcium salt in the quantity from 0,5 to 1 parts by weight.

2. Food product according to Claim 1 **characterised by** the content of oat flakes in the quantity from 50 to 80 parts by weight, powdered whey in the quantity from 15 to 40 parts by weight, lyophilised fruit in the quantity from 4 to 20 parts by weight and magnesium citrate or calcium lactate in the quantity from 0,5 to 1 parts by weight.

3. Food product according to Claim 1 **characterised by** the content of oat flakes in the quantity 59 parts by weight, powdered whey in the quantity 20 parts by weight, lyophilised fruit in the quantity 20 parts by weight and magnesium citrate in the quantity of 1 part by weight.

4. Production method of the food product **characterised by** mixing powdered whey, powdered fruit and magnesium or calcium salt in a horizontal mixer, particularly ribbon-type, in set proportions and adding the adequate weight portions to the portion of cereals placed in a separate package.

5. Production method of the food product **characterised by** mixing powdered whey and magnesium or calcium salt in a horizontal mixer, particularly ribbon-type, in set proportions and adding them in adequately weighted proportion to the package with cereal portion, previously mixed in required proportions with fruit.
